(19) Europäisches Patentamt
European Patent Office
Office européen des brevets

(11) **EP 4 303 753 A1**

(12) **EUROPEAN PATENT APPLICATION**

(43) Date of publication:
**10.01.2024 Bulletin 2024/02**

(21) Application number: **22183443.5**

(22) Date of filing: **06.07.2022**

(51) International Patent Classification (IPC):
***G06F 30/3308*** (2020.01)  ***G06F 115/08*** (2020.01)

(52) Cooperative Patent Classification (CPC):
**G06F 30/3308;** G06F 2115/08

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Infineon Technologies AG
85579 Neubiberg (DE)**

(72) Inventors:
• **PRASAD MANCHIKALAPATI, Rajendra
Bristol, BS32 8EG (GB)**
• **SIVARAJ, Raja Nataraj
Bristol, BS34 8RY (GB)**

(54) **IP CORE TESTING APPARATUS**

(57)    A regression suite apparatus for semiconductor IP having a plurality of functional blocks, provides a knowledge graph defining, for each pair of first and second functional blocks an indication of whether the second functional block depends on the first functional block, and in the case of a dependency the knowledge graph further comprising a weight representing the degree of dependency of the second functional block on the first functional block (10); an input for indicating functional blocks changed in an updated design (20), a selector arranged to select a subset of the tests by selecting numbers of tests of each of a plurality of different levels, wherein the first level selects tests corresponding to the at least one input functional block and the second level selects tests corresponding to the at least one input functional block in combination with second level blocks dependent on the input functional blocks (30); and apparatus for running the selected subset of tests on the semiconductor IP design (40).

Fig. 1

EP 4 303 753 A1

**Description**

Field of the Invention

The invention relates to a method of testing Intellectual Property, IP, cores, together with apparatus and software adapted for such testing.

Background of the Invention

Semiconductor chip design has become increasingly complex over the last decades. Increasingly, complex chip designs are made up of modules, known as IP cores, that are combined with other blocks and interconnects to make up a chip design of a whole chip, that can then be manufactured in a semiconductor fab. For example, a microcontroller chip may include amongst the IP cores one or more CPU cores, such as the TRICORE core, a parallel processing unit, PPU, core, a signal processing unit, SPU, core and many others. Typically, each core is in turn made up of a number of blocks.

During the development of IP cores and as changes are made it is necessary to validate by running tests on the changed design to ensure that the design meets a large number of design criteria. To do this, tests are run using a regression suite. Such a regression suite may include a large number of individual tests covering the entire design under test.

While the number of blocks in the core and/or the complexity of each block increases, the complexity of the core increases. This means that the processing load to run a regression suite may be large: it may for example take twelve hours to run the suite. Such long running times means that such tests may be run overnight. The debug cycle is accordingly complex and time consuming.

The increasing complexity of cores also results in increasingly large teams who may work on the core. Different team members may work on different blocks. After the team member or group of team members have finished working on a block, they commit the block. The regression suite may then be run overnight or even longer.

A single bug in any commit may contaminate the entire run of the regression suite that makes it impossible to be sure that other commits made on the same day and tested in the same run are correct. This can have a serious negative effect on design and debug efforts cascading over many days. Until the changes made on day 1 can be fully validated to a high quality, any subsequent changes may be unsafe.

The increasing size of teams and the fact that many team members may have only a good understanding of a small number of blocks and not the full IP means that the chance of faulty commits increases.

Of course, some projects may work on a different cycle. However, the increasing complexity of designs remains a problem.

There is therefore a need for an improved method of testing IP cores and their constituent blocks during development that addresses this complexity.

Summary of the Invention

According to a first aspect of the invention, there is provided a regression suite apparatus for a semiconductor IP, the semiconductor IP having a plurality of functional blocks, comprising:

a store defining, for each pair of first and second functional blocks an indication of whether the second functional block depends on the first functional block, and in the case of a dependency the knowledge graph further comprising a weight representing the degree of dependency of the second functional block on the first functional block;

an input for inputting at least one input functional block, corresponding to an updated design;

the regression suite apparatus arranged to select a subset of tests by selecting numbers of tests of each of a plurality of different levels, wherein the first level selects tests corresponding to the at least one input functional block and the second level selects tests corresponding to the at least one input functional block in combination with second level blocks dependent on the at least one input functional blocks; and

further arranged to run the selected subset of tests on the updated semiconductor IP design.

When a full regression suite is run thereafter the fact an appropriate subset of tests have been run means that in a very large proportion of the cases all the tests will pass and high qualification will be achieved, as faulty commits are likely to have been detected and debugged earlier in the process.

Note that the indication of whether the second functional block depends on the first functional block may be provided by the weight representing the degree of dependency of the second functional block on the first functional block, with a weight value of 0 indicating no dependency.

The store may comprise a knowledge database including a knowledge graph and a test database indicating for each of the plurality of tests the coverage of that test for each of the functional blocks.

The subset of tests may comprise for example from two tests up to a maximum test number that may be 1% to 50%, for example not greater than 30%, or in another example not greater than 20%, 10% or even 5% of the total number of tests in the test database.

The selected subset of tests may in examples be selected using a nearest neighbor algorithm in the multidimensional space, the selected subset including selecting tests with locations p in the multidimensional space nearest to locations q in the multidimensional space, where q in the first level represents the input functional blocks and q in the second level represents the input functional blocks in combination with the blocks dependent on the input functional blocks.

Brief Description of the Drawings

Examples of the invention will now be described, purely by way of example, with reference to the accompanying drawings, in which:

Figure 1 is a flow diagram illustrating an example;

Figure 2 is a diagram illustrating an example graph;

Figure 3 illustrates first, second, and third level functional blocks;

Figure 4 is a flow diagram illustrating an example;

Figure 5 is a schematic diagram illustrating an example apparatus; and

Figures 6 to 9 are two dimensional representations of selecting tests in an example.

The drawings are purely schematic and not to scale.

Detailed Description

An example of the invention will be presented, purely by way of example. In this example, the method includes the following phases: a preparation phase 10 in which tests are collected and classified, a distribution phase 20 where as a result of a user commit features to be qualified are identified, a selection phase 30 where a subset of the tests is selected, and an operation phase 40 where the selected subset of tests is run.

These phases will now be described in turn.

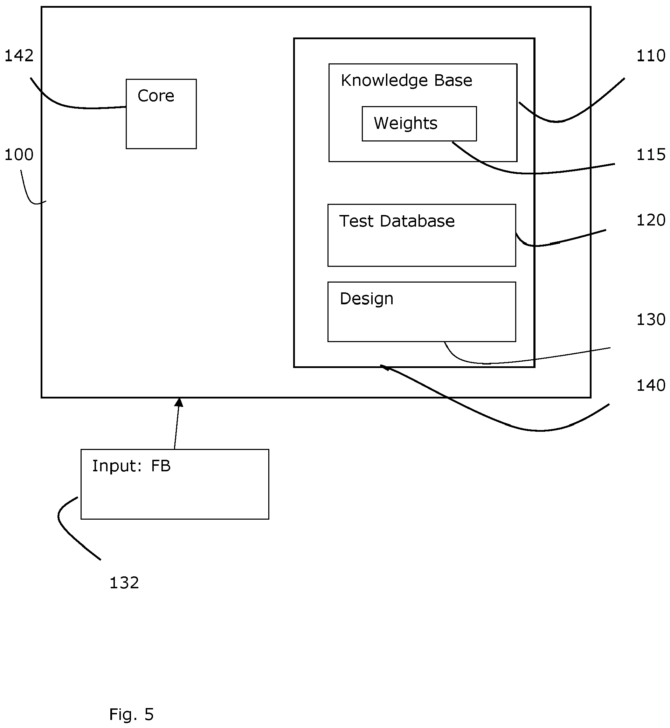

During the preparation phase 10 individual features and blocks are identified, for example by members of the design team, and used to create a knowledge base 110 (Fig. 5). The knowledge base 110 defines a number of features: such features may relate to complete blocks or parts of blocks for example. However, it should be noted that there is no one-to one correspondence between the features and the blocks: moreover, the design blocks may not correspond one-to-one with functional blocks. Instead, features should be identified based both on design blocks, functional blocks, and/or the connectivity.

Table 1 illustrates an example with 10 functional blocks F1 to F10 and a particular connectivity. For example, functional block F5 is dependent on F6 but not the other way round, as indicated by the existence of a weight $W_{6,5}$ but not $W_{5,6}$.

TABLE 1

| Connected Features | Features | | | | | | | | | |
| --- | --- | --- | --- | --- | --- | --- | --- | --- | --- | --- |
| | F1 | F2 | F3 | F4 | F5 | F6 | F7 | F8 | F9 | F10 |
| F1 | | | $W_{3,1}$ | | $W_{5,1}$ | | $W_{7,1}$ | | | $W_{10,1}$ |
| F2 | $W_{1,2}$ | | | | $W_{5,2}$ | | | | | |
| F3 | | $W_{2,3}$ | | | | | | $W_{8,3}$ | | $W_{10,3}$ |
| F4 | $W_{1,4}$ | | | | | | | | | |
| F5 | $W_{1,5}$ | | | | | $W_{6,5}$ | | | | |

(continued)

| Connected Features | Features | | | | | | | | | |
|---|---|---|---|---|---|---|---|---|---|---|
| | F1 | F2 | F3 | F4 | F5 | F6 | F7 | F8 | F9 | F10 |
| F6 | | | | $W_{4,6}$ | | | $W_{7,6}$ | | $W_{9,6}$ | |
| F7 | $W_{1,7}$ | | | $W_{4,7}$ | | | | | $W_{9,7}$ | |
| F8 | | $W_{2,8}$ | | $W_{4,8}$ | | | $W_{7,8}$ | | $W_{9,8}$ | |
| F9 | | $W_{2,9}$ | | | $W_{5,9}$ | | | | | |
| F10 | | | $W_{3,10}$ | | | $W_{6,10}$ | | $W_{8,10}$ | | |

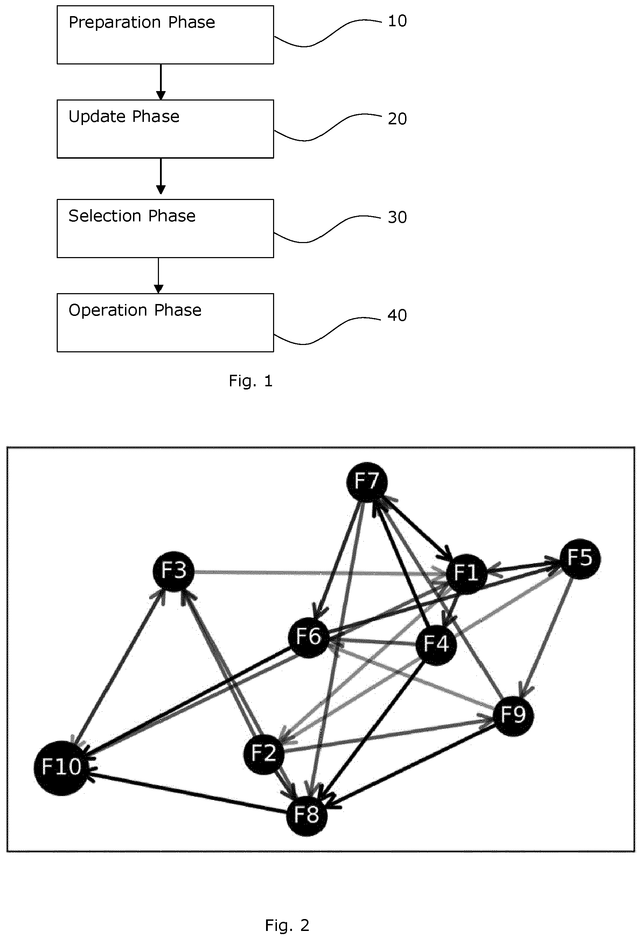

Such a connectivity is illustrated with the graph of Figure 2 which is a graphical representation of the same example as Table 1. Such a graphical representation will be referred to as a knowledge graph. Again, the arrow from F6 to F5 indicates a dependency of F5 on F6 but not the other way around.

Note from Table 1 that the dependencies all have weights W. A small weight is assigned when the dependency is weak, i.e. when the block is relatively independent. For example, if block F1 is only weakly dependent on block F10, a low weight $W_{10,1}$ may indicate this.

Alternatively, if the dependency is strong, a high weight may be assigned. For example, if block F5 is highly dependent on block F1, the weight $W_{1,5}$ may be high. In this connection, high and low are with respect to a predetermined range of weights. It may be convenient to use the range [0,1] for the weights, so a low weight is closer to 0 and a high weight closer to 1.

Note that in the above example the graph is an ordered graph where the dependency of functional block F1 on F2 may be different to the dependency of the functional block F2 on F1. However, the disclosure encompasses arrangements where the knowledge graph is not ordered, i.e. the weight defining the dependency of F1 on F2 also defines the dependency of F2 on F1.

The weights are stored in a weights table 115 in the knowledge base 110.

The preparation phase 10 also includes a test classification phase which assigns each of the available tests in test database 120 a location in a multidimensional space.

Each of the functional blocks F10 is assigned an axis of the multidimensional space. A test that gives 100% coverage of the first functional block F1 will be represented by a number representing 100% in the first axis corresponding to that functional block. Typically, the numbers are in the range [0,1] so a test in the ten-dimensional space of ten functional blocks F1 to F10 (1,0,0,0,0,0,0,0,0,0) represents a test with 100% coverage of the first functional block F1 and no coverage of any other functional blocks.

Thus, each dimension of the multidimensional space corresponds to a functional block (in an example, F1 to F10) and the value represents the amount of contribution of that test to checking that functional feature.

Note that the term "coverage" relates to a number that defines how important the test is to the checking of a functional block. Thus, a high coverage value may define a test which tests a large number of components of the functional block. However, a test may also be assigned a high coverage value with respect to a functional block if it is important to testing that block, even if the test only covers a small area of the block. For example, a test that checks for something that has been a known fault may be given a high coverage value even though it only tests 1% of the surface area of the block as the coverage defines the importance of the test when checking the block.

It will be appreciated that the knowledge base 110 and test database 120 may be combined in a single database or provided as separate entities.

In the update phase 20 the user commits a block or other element of the IP together with the corresponding functional blocks which are accepted as input. This generates one or more locations in the multidimensional space corresponding to the set of input functional blocks. There is no need for the user to consider dependencies of blocks: if the user has only changed functional block F10 then only block F10 needs to be input. This would result in a location in space of (0,0,0,0,0,0,0,0,0,1) derived from the input. In an alternative example, the change might affect equally functional blocks F1 and F2 and so the location in multidimensional space resulting from the input would be (0.5,0.5,0,0,0,0,0,0,0,0).

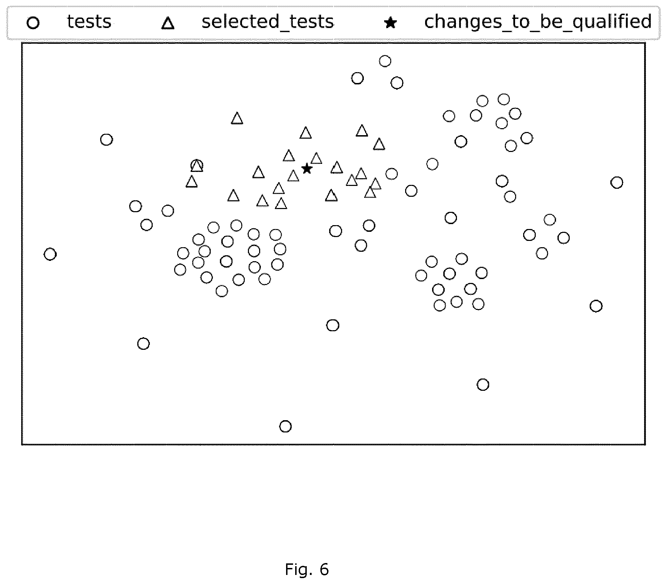

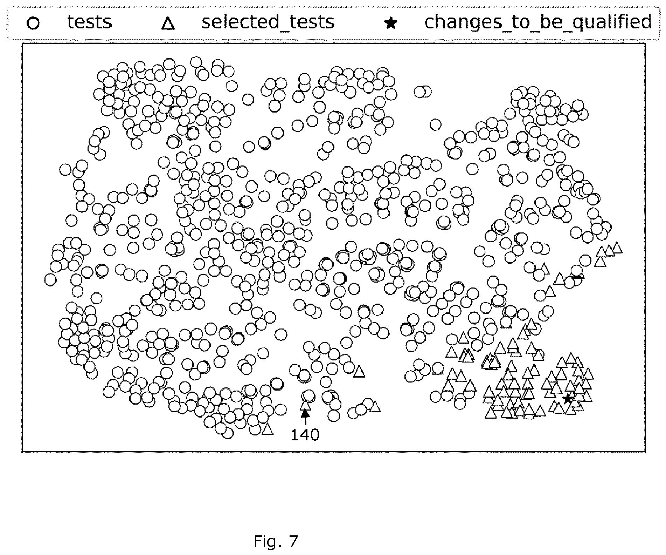

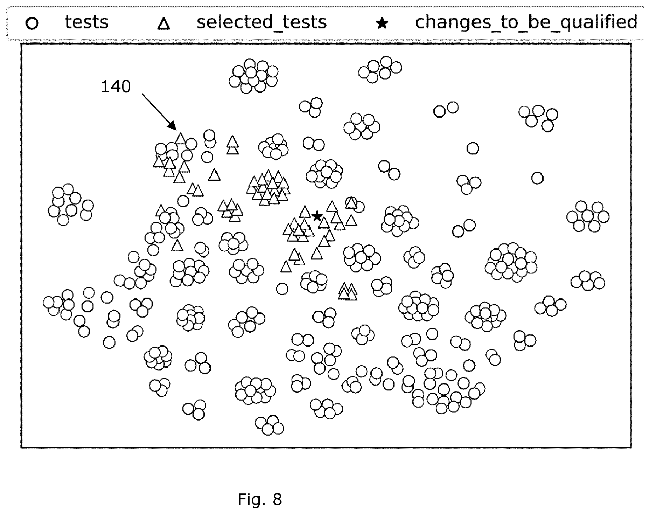

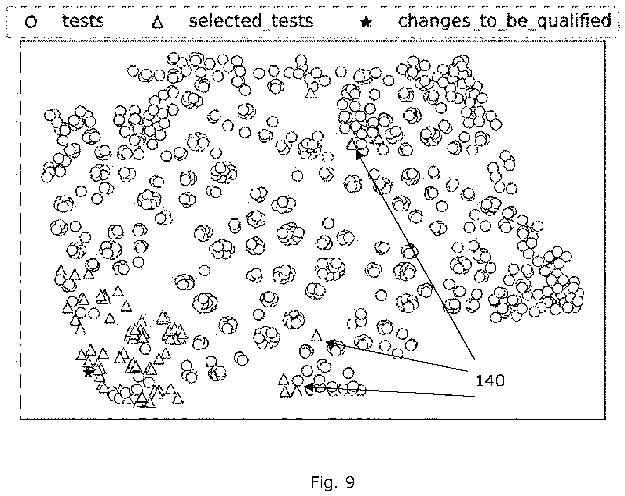

In the selection phase 30 a set of tests is selected. For example, referring to Figure 6-9, there may be 1000 tests represented by dots. In order to run the regression tests in a more limited time than when running the full 1000 tests, only 100 tests are to be selected. Let the total number of tests selected be T.

The tests may be divided into different levels as may now be described with reference to a particular example in which only block F3 is directly affected by the changes implemented in the commit. The level 1 tests are those relevant to block F3, and let the number of levels one tests be x.

The level 2 tests are those tests of corresponding to functional blocks which are dependent on F3. In the example, only functional blocks F1 and F10 are dependent on F3. Thus, tests for F1 and F10, in both cases in combination with F3 are level 2 tests. In other words, there are two groups of level 2 tests: tests optimized for testing a combination of F1 and F3, and tests optimized for testing a combination of F3 and F10.

It will be appreciated however that if the change in block F3 could affect F1, then there is a possibility that a change in F1 could also affect blocks dependent on F1. Thus, there may also be a need for level 3 tests related to the blocks dependent on the blocks dependent on F3. In the example, that is blocks F2, F4, F5, F7, F8, and F1 (again).

In order to keep the number of tests at the fixed value T, only small numbers of level 2 and especially level 3 tests are provided, as may be determined by the weights. In this case, the weights are given in the range [0,1]. The number of level 2 tests is given by the weight: in other words, if the weight $W_{3,1}$ is 0.1, the number of tests for level 2 is 10% of the number for level 1. Similarly, for the level 3 tests, the relative number of tests is given by the product of the relevant weights. For example, the relative number of tests of level 3 is given by $W_{3,1} W_{1,2}$. In the case that $W_{3,1}$ is 0.1 $W_{1,2}$ is 0.08 then the relative number of level 3 tests for F2 is given by $W_{3,1} W_{1,2} = 0.1 \times 0.08 = 0.008$. Note that unless the weights are large the number of tests at level 3 is relatively low. Accordingly, in the example level 4 and higher tests are considered unnecessary. If the weights are larger than the number of level 3 tests will be higher. In alternative embodiments, the number of levels used may be varied as required.

In the example, only level 1, level 2 and level 3 tests are to be conducted. The number x may be calculated from the need to keep the total number of tests T, as:

$$x = \frac{T}{1 + W_{3,1} + W_{3,10} + W_{3,1}W_{1,2} + \cdots + W_{3,10}W_{10,1}}$$

In this way, the selection of tests is organized in such a way that the chance of an error in a commit being detected is very high (over 90% or even 99%, for example) even when (in the example) only 10% of the total number of tests in the suite is conducted.

Once the number of tests corresponding to each functional block has been determined, the actual tests are selected.

This is done by a nearest neighbor algorithm. The tests are selected in which the distance between the identified functional blocks in the multidimensional space as recorded in the knowledge base 110 are closest to the tests in the test database 120. Note that the position in multidimensional space from which the nearest neighbor distance is determined in this example by an equal weight from both the input level 1 block and the level 2 block. For example, in the case of a weight $W_{3,1}$ being 0.25, and the only input level 1 block being F3, at level 2 the location in multidimensional space corresponding to this weight is (0.5,0,0.5,0,0,0,0,0,0,0), i.e. halfway between the values of F1 (1,0,0,0,0,0,0,0,0,0) and F3 (0,0,1,0,0,0,0,0,0,0).

In alternative arrangements the values of **q** may also depend on the weights.

Expressed mathematically, if the multidimensional space has m dimensions 1 to m with points represented by $(x_1, x_2, \ldots x_m)$, point **p** represents a test in the test database 110 and point **q** represents the changes to be qualified, where **p** and **q** are both vectors in the multidimensional space. The values of the components of p are the coverage values with respect to each of the functional blocks as discussed above, i.e. the component of p along the axis corresponding to a particular functional block represents how well the test checks that functional block, represented by the coverage value.

The values of q are provided for each level. Consider at level 1 a commit which only changes functional block F1. Then, in the same ten-dimensional space, **q** is (1,0,0,0,0,0,0,0,0,0).

More generally, at level 2, the location of **q** corresponding to a weight $W_{i,j}$ where at level 1 the commit only relates to Fi has a value $x_i$ of 1/2 and $x_j$ of 1/2, with other component values of x being 0.

In the event that more than one functional block depends on the input functional block, then there will also be more than one value of **q** at level 2, each given by this formula.

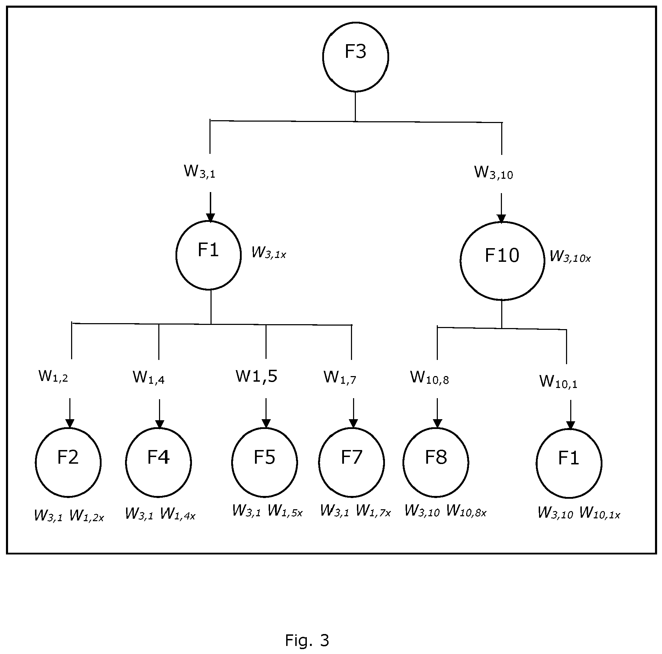

Consider for example Figure 3. In this case, the commit only affects functional block F3 and so at level 1 only a single value of **q** is provided, namely (0,0,1,0,0,0,0,0,0,0).

At the second level, there are two blocks dependent on F3, so there will be two sets of tests selected at this level: one set selected near a combination of F1 and F3, at (0.5,0,0.5,0,0,0,0,0,0,0) and one selected near a combination of F3 and F10 (0,0,0.5,0,0,0,0,0,0,0.5). Note that this latter position is halfway between the value representing F3 and the value representing F10.

At level three, there are six values of **q**, in each case both the number of tests and the location of **q** being determined by the weights. In the case of the dependence of F2 on F1 and F1 in turn on F3, the value of **q** will have components corresponding to F1, F2 and F3, with the components in this case each being 1/3, i.e. equidistant between the locations corresponding to F1, F2 and F3.

The nearest neighbors are the tests with values of p closest to the or each value of q at each level.

The distance D between **p** and **q** is given by

$$D = \left( \sum_{i=1}^{n} (p_i - q_i)^2 \right)^{\frac{1}{2}}$$

where n is the number of dimensions.

The tests are selected for which this distance is minimized.

Note that although in the example a nearest neighbor algorithm is used other approaches delivering tests assigned to particular functional blocks may be used.

After selecting the tests, in an operation phase 40, the selected tests are run. Although only a subset of tests, not all tests, have been run, the use of the method means that if all the tests show that the updated design 130 is correct, it is highly likely that a complete run of all tests would give the same result. A specific example of this is presented below with reference to Table 2.

The inventors have realized that in the case of the second level or the third level, or higher levels if used, those tests that have coverage of both the input functional blocks as well as the dependent functional blocks have the required coverage, and in particular that test blocks close to the value of **q** as described herein which have coverage of both input and dependent blocks provide better test capability than simply taking tests that have values of **p** close to the input functional block and further taking tests with values of **p** close to the dependent functional block. In other words, the method of the example does not at the second level seek tests with good coverage of each functional block, i.e. input functional block and dependent functional block, but instead the method seeks tests that are better suited to testing the combination.

Thus, for example, in the case of F3 as the input functional block and F1 as the dependent functional block, tests that have coverage of both F1 and F3 may be preferred at level 2 to tests close to the point representing F1 with excellent coverage of F1, even if such tests are excellent tests of F1.

The inventors have determined that good results can be obtained with first, second and third levels providing improvement in results without excessive calculations.

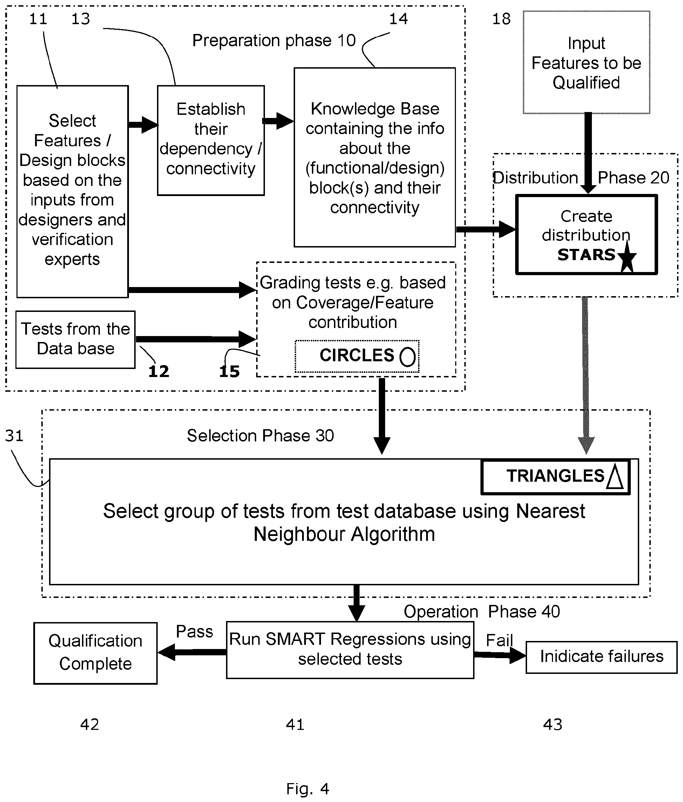

Figure 4 shows the steps of the method in more detail, together with Figure 5 illustrating the apparatus. A computer 100 is provided with CPU 142 and memory 140. Those skilled in the art will realize that the computer may be a single computer or a networked computer, and the memory shown as part of the computer may for example be located remotely for example in the cloud.

In the memory 140 there is provided the test database 120. Further, a design 130 of a semiconductor chip is provided, including functional blocks and parts of the functional blocks.

In the preparation phase 10, the first step is for features and design blocks to be selected (step 11). Their dependency is established (step 12). Knowledge base 110 (Figure 5) is created (step 14) with information about the functional dependency of the blocks and their connectivity. The weights are stored in table 115. Tests are extracted from the test database 120 (step 12) and graded for coverage (step 15). Note, in the figures below the locations of these tests are represented by circles.

A design engineer then changes the design 130 of the semiconductor chip and provides an input 132 indicating which of the functional blocks have been changed in the revised design 130 and hence which need to be tested. This triggers the distribution phase 20.

In the distribution phase 20, the computer 100 automatically identifies the location in multidimensional space corresponding to the input 132. This is represented using a star.

Then, in selection phase 30, tests are selected (step 31) automatically as described above, using a nearest neighbor algorithm.

Having selected the tests, these are run (step 41). If all tests pass, qualification is complete (step 42). Otherwise, there is a need to debug the changes to the design 130 so the computer 100 indicates the failure (step 43).

After this process has been completed several times, and the design 130 is complete, the revised design 130 is then passed to a chip foundry, normally referred to as a fab, and a corresponding semiconductor chip is manufactured.

Some figures will now be presented representing the multidimensional space in a two-dimensional representation. Standard algorithms for preparing such representations from multidimensional data are known. It should be emphasized however that the figures are simply representations and the actual nearest neighbor calculation is carried out in the multidimensional space not the two-dimensional representation. Note that as these figures are representations of a multidimensional space in two dimensions the axes do not correspond to any particular axis in the multidimensional space.

As indicated above, in each of these figures the star represents the input (level 1) location of the input 132, representing which functional blocks are affected by the change to design 130 and so which need testing. The tests are represented by circles, and the selected tests by triangles.

In each case, the method identifies nearest neighbor tests, a subset of the complete set of tests.

However, because of the existence of level 2 and level 3 tests, not all the selected tests are close to the input 132, i.e. not all selected tests are the nearest neighbors of the star. Some of the tests are close to points at level 2 and level 3 and so have an improved coverage of functional blocks that depend on the functional block represented by the star (input 132). In Figures 6, 7 and 8 some examples 140 of this are highlighted with arrows: these represent tests that are not close to the input block represented by the star but test also the dependencies.

Table 2 illustrates results for a set of functional blocks F2 to F10: for each of the functional blocks F2 to F10 (corresponding to the columns), the coverage using a smart selection using the above method (lower row) is greater than the coverage using only a random selection of tests (upper row). Thus, by using the method, a better coverage can be obtained using only a limited number of tests.

Table 2

|  | F2 | F3 | F4 | F5 | F6 | F7 | F8 | F9 | F10 |
|---|---|---|---|---|---|---|---|---|---|
| Feature Coverage from Random Selection (%) | 73% (260) | 32% (56) | 32% (149) | 53% (2067) | 55% (58) | 50% (344) | 89% (257) | 79% (55) | 6% (1131) |
| Feature Coverage from Smart Regression (%) | 85% (300) | 97% (169) | 54% (247) | 66% (2539) | 86% (90) | 90% (605) | 100% (287) | 88% (61) | 31% (5191) |

Thus, the use of the weighted dependency table 115 to select numbers of tests and with a distance algorithm permits increased coverage of tests with a smaller number of tests.

Although the method has been described in the context of a particular approach, those skilled in the art will realize that the method is not limited to the exact method described in the example.

For example, a small number of randomly selected tests may be used, instead of assigning all tests using the method described above.

Further, although the method has been described for testing an IP block that is one of many blocks in a chip, the same method may be used on an IP block that represents the whole of a chip.

Although specific embodiments/examples/aspects have been illustrated and described herein, it will be appreciated by those of ordinary skill in the art that a variety of alternate and/or equivalent implementations may be substituted for the specific examples shown and described without departing from the scope of the present invention. This application is intended to cover any adaptations or variations of the specific examples discussed herein. Therefore, it is intended that this invention be limited only by the claims and the equivalents thereof.

It should be noted that the examples as outlined in the present document may be used stand-alone or in combination with the other methods and systems disclosed in this document. In addition, the features outlined in the context of an apparatus are also applicable to a corresponding method, and vice versa. Furthermore, all aspects of the methods and apparatus outlined in the present document may be arbitrarily combined. In particular, the features of the claims may be combined with one another in an arbitrary manner.

It should be noted that the description and drawings merely illustrate the principles of the proposed methods and systems. Those skilled in the art will be able to implement various arrangements that, although not explicitly described or shown herein, embody the principles of the invention and are included within its spirit and scope. Furthermore, all examples and embodiment outlined in the present document are principally intended expressly to be only for explanatory purposes to help the reader in understanding the principles of the proposed methods and systems. Furthermore, all statements herein providing principles, aspects, and embodiments of the invention, as well as specific examples thereof, are intended to encompass equivalents thereof.

**Claims**

1. A regression suite apparatus for a semiconductor IP, the semiconductor IP having a plurality of functional blocks, comprising:

a store defining, for each pair of first and second functional blocks an indication of whether the second functional block depends on the first functional block, and in the case of a dependency the knowledge graph further comprising a weight representing the degree of dependency of the second functional block on the first functional block;
an input for inputting at least one input functional block, corresponding to an updated design;
the regression suite apparatus arranged to select a subset of tests by selecting numbers of tests of each of a plurality of different levels, wherein the first level selects tests corresponding to the at least one input functional block and the second level selects tests corresponding to the at least one input functional block in combination with second level blocks dependent on the at least one input functional block; and
further arranged to run the selected subset of tests on the updated semiconductor IP design.

2. A regression suite apparatus according to claim 1, wherein the store comprises:

a knowledge graph including the indication of whether the second functional block depends on the first functional block, and in the case of a dependency further comprising the weight representing the degree of dependency of the second functional block on the first functional block; and
a test database indicating for each of the plurality of tests the coverage of that test for each of the functional blocks.

3. A regression suite apparatus according to claim 2, wherein an entry in the test database represents the coverage of each test as a location in a multidimensional space with axes corresponding to respective functional blocks, so that the value in each dimension corresponds to the coverage of the test for the respective functional block.

4. A regression suite apparatus according to claim 3, wherein the selected subset of tests is selected using a nearest neighbor algorithm in the multidimensional space, the selected subset including tests with locations $p$ in the multidimensional space nearest to locations $q$ in the multidimensional space, where $q$ in the first level represents the input functional blocks and $q$ in the second level represents the input functional blocks in combination with the functional blocks dependent on the input functional blocks.

5. A regression suite apparatus according to claim 4, wherein the values of $q$ in the second level, each corresponding to a dependent block in combination with the input functional block, is at a position in multidimensional space equidistant between the position representing the input functional block and position representing the dependent block.

6. A regression suite apparatus according to claim 4 or 5, wherein at the second level the weights determine the number of tests corresponding to each respective dependent block in combination with the input functional block.

7. A regression suite apparatus according to any preceding claim, wherein the ratio of the number of tests for each functional block of the second level to the number of tests of the functional block of the first level on which the functional block of the second level depends is given by the weight representing the degree of dependency of the respective functional block of the second level on the functional block of the first level.

8. A regression suite apparatus according to any preceding claim, wherein the tests are selected from at least three levels, wherein the tests of the third level select tests corresponding to the input functional blocks in combination with the second level functional blocks and further in combination with third level blocks, the third level blocks being blocks dependent on the second level functional blocks.

9. A regression suite apparatus according to claim 8, wherein the ratio of the number of tests for each functional block of the third level to the number of tests of the functional block of the second level on which the functional block of the third level depends is given by the weight representing the degree of dependency of the respective functional block of the third level on the functional block of the second level.

10. A regression suite apparatus according to claim 8 or 9, wherein the selected subset of tests is selected using a nearest neighbor algorithm in the multidimensional space, the selected subset including selecting tests with locations $p$ in the multidimensional space nearest to locations $q$ in the multidimensional space, wherein:

in the first level, $q$ represents the at least one input functional block;
in the second level, each second level dependent block dependent on the input functional block has a value of $q$ equidistant between the position representing the input functional block and position representing the second level dependent block; and
in the third level, each third level dependent block dependent on a respective second level dependent block has a value of $q$ equidistant between the position representing the input functional block, the position representing the second level dependent block, and the position representing the third level dependent block.

11. A method of running a regression suite for a semiconductor IP, the semiconductor IP having a plurality of functional blocks, comprising:

providing for each pair of first and second functional blocks an indication of whether the second functional block depends on the first functional block, and in the case of a dependency further comprising a weight representing the degree of dependency of the second functional block on the first functional block;

accepting an input of at least one input functional block, corresponding to an updated design;

automatically, in a computer, selecting a subset of a plurality of tests by selecting numbers of tests of each of a plurality of different levels, wherein the first level selects tests corresponding to the at least one input functional block and the second level selects tests corresponding to the at least one input functional block in combination with second level blocks dependent on the at least one input functional block; and

automatically, in a computer, running the selected subset of tests on the updated semiconductor IP design.

**12.** A method according to claim 11, further comprising providing a store comprising:

a knowledge database including a knowledge graph including the indication of whether the second functional block depends on the first functional block, and in the case of a dependency further comprising the weight representing the degree of dependency of the second functional block on the first functional block; and

a test database indicating for each of the plurality of tests the coverage of that test for each of the functional blocks,

**13.** A method according to claim 12, further comprising representing the coverage of each test by providing an entry in the test database representing a location in a multidimensional space with axes corresponding to respective functional blocks, so that the value in each dimension corresponds to the coverage of the test for the respective functional block, and optionally wherein the selected subset of tests is selected using a nearest neighbor algorithm in the multidimensional space, the selected subset including tests with locations $\mathbf{p}$ in the multidimensional space nearest to locations $\mathbf{q}$ in the multidimensional space, where $\mathbf{q}$ in the first level represents the input functional blocks and $\mathbf{q}$ in the second level represents the input functional blocks in combination with the blocks dependent on the input functional blocks.

**14.** A method according to any of claims 11 to 13, wherein the tests are selected from at least three levels, wherein the tests of the third level selects tests corresponding to the input functional blocks in combination with the second level functional blocks and further in combination with third level blocks, the third level blocks being blocks dependent on the second level functional blocks, and

optionally wherein the ratio of the number of tests for each functional block of the second level to the number of tests of the functional block of the first level on which the functional block of the second level depends is given by the weight representing the degree of dependency of the respective functional block of the second level on the functional block of the first level, and

further optionally wherein the ratio of the number of tests for each functional block of the third level to the number of tests of the functional block of the second level on which the functional block of the third level depends is given by the weight representing the degree of dependency of the respective functional block of the third level on the functional block of the second level.

**15.** A computer program product arranged to cause the said computer to carry out a method according to any of claims 11 to 14.

Fig. 1

Fig. 2

Fig. 3

Fig. 4

142

100

Core

110 Knowledge Base

115 Weights

120 Test Database

130 Design

140

Input: FB

132

Fig. 5

Fig. 6

Fig. 7

Fig. 8

Fig. 9

Europäisches
Patentamt

European
Patent Office

Office européen
des brevets

**EUROPEAN SEARCH REPORT**

Application Number

EP 22 18 3443

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PARTHASARATHY GANAPATHY ET AL: "RTL Regression Test Selection using Machine Learning", 2022 27TH ASIA AND SOUTH PACIFIC DESIGN AUTOMATION CONFERENCE (ASP-DAC), IEEE, 17 January 2022 (2022-01-17), pages 281-287, XP034089355, DOI: 10.1109/ASP-DAC52403.2022.9712550 [retrieved on 2022-02-11] * abstract * * page 281 - page 286 * ----- | 1-15 | INV. G06F30/3308 ADD. G06F115/08 |
| X | US 2015/082263 A1 (VASUDEVAN SHOBHA [US] ET AL) 19 March 2015 (2015-03-19) * abstract * * paragraph [0002] - paragraph [0005] * * paragraph [0045] - paragraph [0060] * ----- | 1-15 | |
| X | LARPRATTANAKUL ADIPAT ET AL: "An Approach for Regression Test Case Selection Using Object Dependency Graph", 2013 5TH INTERNATIONAL CONFERENCE ON INTELLIGENT NETWORKING AND COLLABORATIVE SYSTEMS, IEEE, 9 September 2013 (2013-09-09), pages 617-621, XP032503125, DOI: 10.1109/INCOS.2013.115 [retrieved on 2013-10-11] * abstract * * page 617 - page 620 * ----- -/-- | 1-15 | TECHNICAL FIELDS SEARCHED (IPC) G06F |

The present search report has been drawn up for all claims

| Place of search | Date of completion of the search | Examiner |
|---|---|---|
| Munich | 20 January 2023 | Radev, Boyan |

EPO FORM 1503 03.82 (P04C01)

Europäisches
Patentamt

European
Patent Office

Office européen
des brevets

## EUROPEAN SEARCH REPORT

Application Number

EP 22 18 3443

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Nörenberg Ralf ET AL: "An Efficient Specification-Based Regression Test Selection Technique for E/E-Systems", , 4 October 2011 (2011-10-04), pages 1-13, XP093014879, Retrieved from the Internet: URL:https://www.user.tu-berlin.de/komm/CD/paper/060132.pdf [retrieved on 2023-01-17] * abstract * * page 7 - page 12 * ----- | 1-15 | |
| X | CN 111 143 226 A (NANJING YIRUI TECH CO LTD; NANJING YIYI CLOUD BIG DATA TECH CO LTD) 12 May 2020 (2020-05-12) * the whole document * ----- | 1-15 | |
| X | Biswas Swarnendu ET AL: "Regression test selection techniques: a survey", Informatica (Ljubljana), 1 September 2011 (2011-09-01), pages 289-321, XP093014843, Retrieved from the Internet: URL:https://citeseerx.ist.psu.edu/document?repid=rep1&type=pdf&doi=fff0ce2198d4be370611f3b4cff99552a70483f4 [retrieved on 2023-01-17] * abstract * * page 296 - page 307 * ----- | 1-15 | TECHNICAL FIELDS SEARCHED (IPC) |

The present search report has been drawn up for all claims

| Place of search | Date of completion of the search | Examiner |
|---|---|---|
| Munich | 20 January 2023 | Radev, Boyan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 18 3443

This annex lists the patent family members relating to the patent documents cited in the above-mentioned European search report.
The members are as contained in the European Patent Office EDP file on
The European Patent Office is in no way liable for these particulars which are merely given for the purpose of information.

20-01-2023

| Patent document cited in search report | Publication date | Patent family member(s) | Publication date |
|---|---|---|---|
| US 2015082263 A1 | 19-03-2015 | NONE | |
| CN 111143226 A | 12-05-2020 | NONE | |

EPO FORM P0459

For more details about this annex : see Official Journal of the European Patent Office, No. 12/82